# EUROPÄISCHE PATENTSCHRIFT

(11) **EP 4 112 427 B1**
(45) Veröffentlichungstag und Bekanntmachung des Hinweises auf die Patenterteilung: **06.08.2025**
(21) Anmeldenummer: 22178355.8
(22) Anmeldetag: 10.06.2022
(51) Int. Cl.: B62D 55/14, F41H 7/00

(54) **KETTENLAUFROLLE, KETTENLAUFROLLENANORDNUNG UND MILITÄRISCHES KETTENFAHRZEUG**
CHAIN RUNNING ROLLER, CHAIN RUNNING ROLLER ASSEMBLY AND MILITARY TRACKED VEHICLE
GALET POUR CHENILLE, AGENCEMENT DE GALET POUR CHENILLE ET VÉHICULE MILITAIRE À CHENILLES

(30) Priorität: 02.07.2021 DE 102021117186
(43) Veröffentlichungstag der Anmeldung: 04.01.2023
(73) Patentinhaber: Rheinmetall Landsysteme GmbH, 29345 Südheide (DE)
(72) Erfinder: HASS, Frank, 24235 Wendtorf (DE); STEINKE, Dirk, 24226 Heikendorf (DE); HOFFMEISTER, Rick, 24116 Kiel (DE); DOOSE, Tim, 24783 Osterrönfeld (DE)
(74) Vertreter: HKW Intellectual Property PartG mbB

(56) Entgegenhaltungen:
- CN-A- 107 554 633
- US-A- 5 171 074
- US-B2- 10 272 959

## Beschreibung

Die vorliegende Erfindung betrifft eine Kettenlaufrolle für ein militärisches Kettenfahrzeug, eine Kettenlaufrollenanordnung mit einer derartigen Kettenlaufrolle und ein militärisches Kettenfahrzeug mit einer derartigen Kettenlaufrolle und/oder einer derartigen Kettenlaufrollenanordnung.

Militärische Kettenfahrzeuge, wie beispielsweise Schützenpanzer, umfassen ein Kettenlaufwerk mit einer Kette, die mit Hilfe einer Antriebsrolle angetrieben ist, und mehreren gefederten Laufrollen, welche die Kette in Kontakt mit einem Untergrund halten, auf dem sich das Kettenfahrzeug fortbewegt. Derartige Laufrollen weisen eine um die jeweilige Laufrolle umlaufende Laufrollenbandage auf, die beispielsweise aus Gummi gefertigt ist. Die Laufrollenbandagen unterbinden einen direkten Kontakt der Kette mit den Laufrollen, wodurch ein übermäßiger Verschleiß der Kette und der Laufrollen verhindert wird. Im Fahrbetrieb des Kettenfahrzeugs erwärmen sich diese Laufrollenbandagen aufgrund von Walkarbeit. Bei der Verwendung von metallischen Werkstoffen für die Laufrollen kann diese Wärme über Wärmeleitung von den Laufrollenbandagen abgeführt werden.

Aus Gründen der Gewichtsersparnis ist es jedoch vorteilhaft, für die Laufrollen faserverstärkte Kunststoffmaterialien einzusetzen. Bei der Verwendung von faserverstärkten Kunststoffmaterialien für die Laufrollen kann gemäß betriebsinternen Erkenntnissen die bei der Walkarbeit erzeugte Wärme aus den Laufrollenbandagen jedoch nicht ausreichend abgeführt werden. Dies kann dazu führen, dass die Laufrollenbandagen beschädigt werden oder sich von der Laufrolle ablösen. Dies gilt es zu verbessern.

Die US 10 272 959 B2 zeigt eine Raupenbaugruppe mit einer Raupe für den Eingriff mit dem Boden und eine Vielzahl von Rädern, die ein Antriebsrad für den Antrieb der Raupe um die Räder herum aufweisen.

Die US 5 171 074 A beschreibt ein Leichtbaurad mit einem niedrigen Massenträgheitsmoment, das innere, Rücken an Rücken liegende Metallscheiben aufweist, die an einer Nabe durch eine Vielzahl von in Umfangsrichtung beabstandeten Nabenstiften befestigt sind.

Vor diesem Hintergrund besteht eine Aufgabe der vorliegenden Erfindung darin, eine verbesserte Kettenlaufrolle für ein militärisches Kettenfahrzeug zur Verfügung zu stellen.

Demgemäß wird eine Kettenlaufrolle für ein militärisches Kettenfahrzeug vorgeschlagen. Die Kettenlaufrolle umfasst einen Laufrollenkörper, der zumindest abschnittsweise aus einem faserverstärkten Kunststoffmaterial gefertigt ist, eine um den Laufrollenkörper umlaufende Laufrollenbandage, und eine Kühleinrichtung zum Kühlen der Laufrollenbandage im Betrieb der Kettenlaufrolle. Dabei weist die Kühleinrichtung ein Lüfterrad zum aktiven Kühlen der Laufrollenbandage im Betrieb der Kettenlaufrolle auf, wobei das Lüfterrad innerhalb des Laufrollenkörpers angeordnet ist.

Durch das Vorsehen der Kühleinrichtung ist es möglich, Wärme aus der Laufrollenbandage abzuführen, so dass eine übermäßige Erwärmung der Laufrollenbandage verhindert wird. Hierdurch wird eine Beschädigung und/oder ein Ablösen der Laufrollenbandage von dem Laufrollenkörper verhindert oder zumindest verzögert. Durch die Verwendung eines faserverstärkten Kunststoffmaterials für den Laufrollenkörper kann eine signifikante Gewichtsersparnis erzielt werden. Die Gewichtsersparnis pro Kettenlaufrolle kann bis zu 10 kg betragen.

Durch die Kühlung der Laufrollenbandage kann ferner bei der Verwendung einer Gummikette ein geringeres Temperaturniveau erzielt werden. Durch die geringere Aufheizung der Gummikette durch die Walkarbeit im Fahrbetrieb kann so aufgrund der Kühleinrichtung der Einsatz relativ leichter Gummiketten auch für militärische Kettenfahrzeuge mit einem Gefechtsgewicht von über 50 t ermöglicht werden, bei denen der Einsatz von Gummiketten bislang nicht möglich war. Der Einsatz von Gummiketten kann eine Gewichtsersparnis von etwa 70 kg pro Meter Kette bedeuten.

Das militärische Kettenfahrzeug kann beispielsweise ein Schützenpanzer oder dergleichen sein. Das militärische Kettenfahrzeug kann jedoch auch ein Kampfpanzer oder ein Bergepanzer sein. Die Kettenlaufrolle ist jedoch auch für zivile Zwecke oder beliebige behördliche Zwecke einsetzbar. Das militärische Kettenfahrzeug kann bewaffnet oder unbewaffnet sein. Die Kettenlaufrolle kann auch als militärische Kettenlaufrolle oder Militär-Kettenlaufrolle bezeichnet werden. Unter dem "Betrieb" der Kettenlaufrolle ist insbesondere deren bestimmungsgemäßer Gebrauch zu verstehen. Die Kettenrolle dreht sich im Betrieb, insbesondere im Fahrbetrieb des militärischen Kettenfahrzeugs.

Das militärische Kettenfahrzeug umfasst ein Kettenlaufwerk mit einer durch eine Antriebsrolle angetriebenen Kette und mehreren Kettenlaufrollen, über welche die Kette läuft. Ferner kann das Kettenlaufwerk eine beliebige Anzahl von Stützrollen und eine Umlenkrolle aufweisen. Die Stützrollen sind nicht zwingend erforderlich. Die Antriebsrolle kann frontseitig an dem militärischen Kettenfahrzeug angeordnet sein. Die Umlenkrolle kann heckseitig an dem militärischen Kettenfahrzeug angeordnet sein. Umgekehrt kann die Antriebsrolle auch heckseitig und die Umlenkrolle frontseitig angeordnet sein.

Die Kettenlaufrollen sind im Gegensatz zu der Antriebsrolle nicht angetrieben. Die Antriebsrolle ist beispielsweise mit einem Antrieb des militärischen Kettenfahrzeugs gekoppelt. Das Kettenlaufwerk umfasst vorzugsweise mehrere Kettenlaufrollen. Dabei kann jeder Kettenlaufrolle ein Schwingarm zugeordnet sein, an dem die Kettenlaufrolle drehbar gelagert ist. Demgemäß wird auch ein Kettenlaufwerk umfassend zumindest eine Kettenlaufrolle und zumindest einen Schwingarm vorgeschlagen, an dem die zumindest eine Kettenlaufrolle um eine Drehachse drehbar gelagert ist. Das Kettenlaufwerk kann eine beliebige Anzahl von Kettenlaufrollen umfassen. Der Schwingarm ist nicht zwingend erforderlich.

Der Laufrollenkörper ist insbesondere rotationssymmetrisch zu der zuvor erwähnten Drehachse aufgebaut. Der Laufrollenkörper und eine Laufrollenachse, an der die Kettenlaufrolle beziehungsweise der Laufrollenkörper drehbar gelagert ist, sind koaxial zueinander angeordnet. Die Laufrollenachse selbst ist bevorzugt ebenfalls rotationssymmetrisch zu der Drehachse aufgebaut. Der Laufrollenkörper kann vollständig aus dem faserverstärkten Kunststoffmaterial gefertigt sein. Ein derartiges faserverstärktes Kunststoffmaterial umfasst Verstärkungsfasern, die in einer Kunststoffmatrix eingebettet sind. Die Kunststoffmatrix kann beispielsweise ein Epoxidharz oder andere beliebige Duroplaste oder auch Thermoplaste umfassen. Vorzugsweise ist der Laufrollenkörper zumindest abschnittsweise aus einem kohlenstofffaserverstärkten Kunststoffmaterial gefertigt. Als Verstärkungsfasern können jedoch auch Glasfasern, Aramidfasern, Borfasern oder dergleichen eingesetzt werden. Es kann auch ein Gemisch unterschiedlicher Verstärkungsfasern Anwendung finden.

Der Laufrollenkörper umfasst vorzugsweise eine erste Laufrollenhälfte und eine zweite Laufrollenhälfte, die fest, insbesondere stoffschlüssig, miteinander verbunden, beispielsweise miteinander verklebt, sind. Die Laufrollenhälften sind vorzugsweise koaxial zueinander angeordnet. Der Laufrollenkörper kann auch ein einteiliges, insbesondere ein materialeinstückiges, Bauteil sein. "Einstückig" oder "einteilig" bedeutet vorliegend, dass der Laufrollenkörper nicht aus unterschiedlichen einzelnen Bauteilen aufgebaut ist, sondern eine Komponente oder ein Bauteil bildet. Vorliegend bedeutet dies, dass die beiden Laufrollenhälften ein gemeinsames Bauteil, nämlich den Laufrollenkörper, bilden. "Materialeinstückig" bedeutet vorliegend, dass der Laufrollenkörper durchgehend aus demselben Material gefertigt ist.

Der Laufrollenkörper kann jedoch auch mehrteilig ausgebildet sein. Beispielsweise kann der Laufrollenkörper die zuvor erwähnten Laufrollenhälften aufweisen, die stoffschlüssig miteinander verbunden sind. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Beispielsweise sind die Laufrollenhälften miteinander verklebt. Die Laufrollenhälften können jedoch alternativ oder zusätzlich auch miteinander verstiftet, verschraubt und/oder vernietet sein. Die Laufrollenhälften für sich wiederum können einstückige, insbesondere materialeinstückige, Bauteile oder Komponenten sein.

Die Laufrollenbandagen sind als ringförmige und vollständig um den Laufrollenkörper umlaufende Bauteile ausgebildet. Insbesondere sind die Laufrollenbandagen stoffschlüssig mit Außenflächen des Laufrollenkörpers beziehungsweise der Laufrollenhälften verbunden. Beispielsweise sind die Laufrollenbandagen auf die Außenflächen aufgeklebt oder aufvulkanisiert. Die Außenflächen sind rotationssymmetrisch zu der Drehachse aufgebaut, um die sich die Kettenlaufrolle beziehungsweise der Laufrollenkörper im Betrieb der Kettenlaufrolle dreht. Der Laufrollenkörper beziehungsweise die Laufrollenhälften sind jeweils rotationssymmetrisch zu der Drehachse aufgebaut.

Die Laufrollenbandage beziehungsweise die Laufrollenbandagen sind bevorzugt aus einem Kunststoffmaterial gefertigt. Das für die Laufrollenbandage verwendete Kunststoffmaterial unterscheidet sich bevorzugt von dem faserverstärkten Kunststoffmaterial, aus dem der Laufrollenkörper gefertigt ist. "Unterscheiden" bedeutet vorliegend insbesondere, dass sich die Kunststoffmaterialien chemisch voneinander unterscheiden. Beispielsweise umfasst das faserverstärkte Kunststoffmaterial, wie zuvor erwähnt, ein Epoxidharz als Kunststoffmatrix, während das für die Laufrollenbandage verwendete Kunststoffmaterial ein Elastomer sein kann.

Insbesondere ist die Laufrollenbandage aus einem Elastomer gefertigt. Die Laufrollenbandagen können beispielsweise aus einem synthetischen oder natürlichen Kautschuk gefertigt sein. Unter "Elastomeren" oder "elastomeren Kunststoffmaterialien" sind vorliegend insbesondere formfeste, jedoch elastisch verformbare Kunststoffmaterialien, deren Glasübergangspunkt sich unterhalb der Einsatztemperatur befindet, zu verstehen. Ein Elastomer kann sich bei Zug- und Druckbelastung elastisch verformen, findet aber danach in seine ursprüngliche, unverformte Geometrie zurück. Beispielsweise ist jeder Laufrollenhälfte eine Laufrollenbandage zugeordnet.

Das für die Laufrollenbandage verwendete Kunststoffmaterial kann jedoch auch ein Thermoplast oder ein thermoplastisches Kunststoffmaterial sein. Unter "Thermoplasten" oder "thermoplastischen Kunststoffmaterialien" sind vorliegend insbesondere Kunststoffmaterialien zu verstehen, die sich in einem bestimmten Temperaturbereich verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Kunststoffmaterials einsetzt. Ferner kann die Laufrollenbandage beispielsweise auch aus einem, insbesondere gussfähigen, Silikon, beispielsweise aus einem Silikonkautschuk oder einem Silikonelastomer, gefertigt sein. Auch ein natürlicher Werkstoff, wie beispielsweise Kork, kann Anwendung finden. Die Laufrollenbandage kann auch aus einem Verbundwerkstoff, beispielsweise umfassend eine Kombination der vorgenannten Werkstoffe, gefertigt sein.

Die Laufrollenbandagen können gelocht sein, so dass Kühlluft durch die Laufrollenbandagen hindurchgeführt werden kann. Alternativ können die Laufrollenbandagen jedoch auch ungelocht sein. Die Kühleinrichtung ist insbesondere zum aktiven Kühlen der Laufrollenbandage geeignet. Unter "aktiver Kühlung" ist vorliegend insbesondere eine Kühlung zu verstehen, bei der Kühlluft zwangsweise an der Laufrollenbandage vorbei oder durch diese hindurchgeführt wird, um von der Laufrollenbandage Wärme abzuführen. Das heißt insbesondere, dass aktiv ein Kühlluftstrom erzeugt wird.

Unter einer "passiven Kühlung" wäre dementsprechend beispielsweise eine Kühlung zu verstehen, die rein auf Wärmeleitung basiert. Dies schließt jedoch nicht aus, dass sich auch eine aktive Kühlung das Prinzip der Wärmeleitung zu Nutze macht. Beispielsweise derart, dass mit Hilfe von Kühlluft Wärme von Kühllamellen der Kettenlaufrolle abgeführt wird. In diesem Fall kann die Wärme mit Hilfe von Wärmeleitung von der Laufrollenbandage auf die jeweilige Kühllamelle übertragen werden.

Gemäß einer Ausführungsform weist der Laufrollenkörper Kühlluftdüsen zum Zuführen von Kühlluft zu der Laufrollenbandage auf.

Die Kühlluft kann dem Laufrollenkörper beispielsweise über den Schwingarm zugeführt werden, an dem die Kettenlaufrolle drehbar gelagert ist. Der Schwingarm kann hierzu einen innenliegenden Kühlluftführungskanal aufweisen. Der Laufrollenkörper ist vorzugsweise hohl und umschließt einen Innenraum. Die Kühlluftdüsen sind vorzugsweise kegelstumpfförmig oder konisch ausgebildet und verjüngen sich ausgehend von dem Innenraum des Laufrollenkörpers hin zu einer Umgebung der Kettenlaufrolle. Hierdurch kann eine höhere Durchströmungsgeschwindigkeit der Kühlluft erzielt werden. Die Kühlluftdüsen verlaufen vorzugsweise radial beziehungsweise in einer Radialrichtung des Laufrollenkörpers beziehungsweise der Kettenlaufrolle. Die Kühlluftdüsen können daher auch als radiale Kühlluftdüsen oder Radialkühlluftdüsen bezeichnet werden. Die Radialrichtung ist orientiert von der Drehachse in Richtung der Außenfläche des Laufrollenkörpers beziehungsweise der Laufrollenhälften.

Gemäß einer weiteren Ausführungsform weist die Laufrollenbandage Kühlluftdurchlässe, in welche die Kühlluftdüsen einmünden, auf.

In diesem Fall sind die Laufrollenbandagen oder ist die Laufrollenbandage gelocht. Insbesondere ist eine beliebige Anzahl von Kühlluftdurchlässen vorgesehen, die gleichmäßig über einen Umfang der jeweiligen Laufrollenbandage verteilt angeordnet sind. Dabei entspricht die Anzahl der Kühlluftdurchlässe der Anzahl der Kühlluftdüsen. Das heißt, dass jeder Kühlluftdüse ein Kühlluftdurchlass zugeordnet ist. Entlang der Radialrichtung betrachtet ist somit unter jedem Kühlluftdurchlass eine Kühlluftdüse platziert. Die Kühlluftdurchlässe führen radial durch die Laufrollenbandagen hindurch. Die Kühlluftdurchlässe können daher auch als radiale Kühlluftdurchlässe oder Radialkühlluftdurchlässe bezeichnet werden.

Gemäß einer weiteren Ausführungsform ist eine Strömungsrichtung der Kühlluft aus einem Innenraum des Laufrollenkörpers hin zu einer Umgebung der Kettenlaufrolle orientiert.

Hierdurch wird zuverlässig verhindert, dass Staub oder andere Verschmutzungen von der Umgebung in den Innenraum gelangen und so die Kettenlaufrolle verschmutzen. Insbesondere herrscht in dem Innenraum ein Überdruck relativ zu der Umgebung. Der Überdruck kann durch ein Gebläse oder ein Lüfterrad erzeugt werden. Das Gebläse kann Teil der Kühleinrichtung sein.

Die Kühleinrichtung weist ein Lüfterrad zum aktiven Kühlen der Laufrollenbandage im Betrieb der Kettenlaufrolle auf.

Das Lüfterrad umfasst vorzugsweise eine beliebige Anzahl von Lüfterblättern oder Lüfterschaufeln. Das Lüfterrad sorgt für eine erzwungene Kühlluftströmung von dem Innenraum hin zu der Umgebung durch die Kühlluftdüsen. Durch die erzwungene Kühlluftströmung wird die Laufrollenbandage aktiv gekühlt.

Das Lüfterrad ist innerhalb des Laufrollenkörpers angeordnet.

Vorzugsweise ist das Lüfterrad vollständig innerhalb des Laufrollenkörpers platziert. Das Lüfterrad wird bevorzugt von dem Laufrollenkörper vollständig umschlossen. Das Lüfterrad ist in dem Innenraum des Laufrollenkörpers platziert. Das Lüfterrad ist bevorzugt aus einem faserverstärkten Kunststoffmaterial, insbesondere aus einem kohlenstofffaserverstärkten Kunststoffmaterial, gefertigt. Es können jedoch auch beliebige andere Verstärkungsfasern eingesetzt werden. Das Lüfterrad kann auch aus einem metallischen Werkstoff, beispielsweise aus einer Aluminiumlegierung, gefertigt sein.

Gemäß einer weiteren Ausführungsform umfasst die Kettenlaufrolle ein Planetengetriebe zum Antreiben des Lüfterrads.

Das Planetengetriebe ist innerhalb des Laufrollenkörpers platziert. Das heißt, dass das Planetengetriebe in dem Innenraum des Laufrollenkörpers angeordnet ist. Der Laufrollenkörper umschließt das Planetengetriebe somit vollständig. Mit Hilfe des Planetengetriebes kann erreicht werden, dass sich im Betrieb der Kettenlaufrolle das Lüfterrad mit einer höheren Drehzahl dreht als die Kettenlaufrolle selbst. Hierdurch kann die Kühlleistung auch bei geringen Fahrgeschwindigkeiten des militärischen Kettenfahrzeugs erreicht werden.

Gemäß einer weiteren Ausführungsform umfasst die Kettenlaufrolle einen Lüfterradträger, der das Lüfterrad trägt, wobei der Lüfterradträger ein Hohlrad des Planetengetriebes aufweist.

Das Planetengetriebe umfasst ferner ein feststehendes Sonnenrad, das an der feststehenden Laufrollenachse vorgesehen ist. An der Laufrollenachse ist die Kettenlaufrolle drehbar gelagert. Zwischen dem Hohlrad und dem Sonnenrad kann eine Vielzahl an Planetenrädern vorgesehen sein. Beispielsweise sind drei Planetenräder vorgesehen. Die Planetenräder können beispielsweise an einem Laufrollenträger der Kettenlaufrolle drehbar gelagert sein. Durch die Verwendung eines Planetengetriebes kann ein besonders kompakter Bauraum erreicht werden. Der Lüfterradträger ist vorzugsweise mit Hilfe eines Lagers drehbar an der Laufrollenachse gelagert. Das Planetengetriebe läuft um die Laufrollenachse um. Das heißt, dass das Planetengetriebe die Laufrollenachse umschließt.

Gemäß einer weiteren Ausführungsform weist die Kühleinrichtung Kühllamellen zum Abführen von Wärme von der Laufrollenbandage auf, wobei die Kühllamellen radial in den Laufrollenkörper hineinragen.

Es kann auch nur eine Kühllamelle vorgesehen sein. Für den Fall, dass die Kühllamellen vorgesehen sind, ist die Laufrollenbandage bevorzugt ungelocht. "Radial" bedeutet vorliegend auf die Drehachse der Kettenlaufrolle zu. Insbesondere ragen die Kühllamellen in den Innenraum des Laufrollenkörpers hinein, wo sie von der Kühlluft umströmt werden. Die Kühllamellen sind beispielsweise scheibenförmig aufgebaut und verlaufen rotationssymmetrisch zu der Drehachse. Beispielsweise können die Kühllamellen aus einer Aluminiumlegierung oder einer Kupferlegierung gefertigt sein. Die Kühllamellen können auch sogenannte Heat Pipes sein oder Heat Pipes umfassen. Unter einem "Heat Pipe" oder einem "Wärmerohr" ist vorliegend ein Wärmeübertrager zu verstehen, der unter Nutzung von Verdampfungswärme eines Mediums eine hohe Wärmestromdichte erlaubt. Auf diese Weise können große Wärmemengen auf kleiner Querschnittsfläche transportiert werden.

Gemäß einer weiteren Ausführungsform umfasst die Kettenlaufrolle eine Wärmleitschicht, die zwischen einer Außenfläche des Laufrollenkörpers und der Laufrollenbandage angeordnet ist, wobei die Wärmeleitschicht wärmeleitend mit den Kühllamellen verbunden ist.

Insbesondere ist die Wärmeleitschicht auch wärmeleitend mit der Laufrollenbandage verbunden. Die Wärmeleitschicht kann beispielsweise eine Wärmeleitpaste sein. Beispielsweise ist die Wärmeleitschicht eine Kupferpaste oder weist eine Kupferpaste auf. Die Wärmeleitschicht sorgt für eine gute Wärmeübertragung zwischen der Laufrollenbandage und den Kühllamellen. Die Wärmeleitschicht kann auch eine Beschichtung, beispielsweise eine galvanisch abgeschiedene Beschichtung, sein, die auf der Außenfläche abgeschieden ist.

Ferner wird eine Kettenlaufrollenanordnung für ein militärisches Kettenfahrzeug vorgeschlagen. Die Kettenlaufrollenanordnung umfasst einen Schwingarm, und eine wie zuvor erläuterte Kettenlaufrolle, die um eine Drehachse drehbar an dem Schwingarm gelagert ist.

Die Kettenlaufrollenanordnung kann ein Stützrollen-Laufwerk sein oder als solches bezeichnet werden. Das heißt insbesondere, dass die Kettenlaufrollenanordnung wie zuvor erwähnte Stützrollen aufweisen kann. Die Kettenlaufrollenanordnung kann jedoch auch ein sogenanntes Christie-Laufwerk sein. Ein Christie-Laufwerk weist keine Stützrollen auf. Die Kettenlaufrollenanordnung kann Teil des zuvor erwähnten Kettenlaufwerks sein. Das Kettenlaufwerk kann mehrere Kettenlaufrollenanordnungen umfassen. Die Kettenlaufrollenanordnung kann eine beliebige Anzahl von Schwingarmen und Kettenlaufrollen aufweisen. Dabei ist jedem Schwingarm eine Kettenlaufrolle zugeordnet. Die Schwingarme sind beispielsweise federnd an einer Wanne des Kettenfahrzeugs gelagert. Hierzu können beispielsweise Torsionsstäbe oder Torsionsfedern Anwendung finden. Jedem Schwingarm ist ein Torsionsstab beziehungsweise eine Torsionsfeder zugeordnet, so dass die jeweilige Kettenlaufrolle bei der Bewältigung von Bodenunebenheiten in einer Hochrichtung oder y-Richtung einfedern und entgegen der y-Richtung ausfedern kann. Die Schwingarme können hierbei von einem ausgefederten Zustand in einen eingefederten Zustand und umgekehrt verbracht werden. Bei dem Verbringen des jeweiligen Schwingarms von dem ausgefederten Zustand in den eingefederten Zustand, wird der jeweilige Torsionsstab in sich verdreht, also tordiert. Das heißt, dass zum Verbringen des jeweiligen Schwingarms von dem ausgefederten Zustand in den eingefederten Zustand eine Kraft beziehungsweise ein Drehmoment erforderlich ist. In dem eingefederten Zustand ist der Torsionsstab demgemäß unter einer Vorspannung, insbesondere einer Federvorspannung. Dies führt dazu, dass die Schwingarme in Richtung des ausgefederten Zustands federvorgespannt sind. Demgemäß bewegen sich die Schwingarme dann, wenn keine Kraft oder kein Drehmoment auf den jeweiligen Schwingarm wirkt, selbsttätig von dem eingefederten Zustand zurück in den ausgefederten Zustand.

Gemäß einer Ausführungsform weist der Schwingarm zum Zuführen von Kühlluft zu der Kettenlaufrolle einen internen Kühlluftführungskanal auf.

Mit anderen Worten ist der Schwingarm zumindest abschnittsweise hohl, so dass die Kühlluft durch den Schwingarm hindurchgeführt werden kann. Dem Schwingarm kann beispielsweise ein wie zuvor erwähntes Gebläse zugeordnet sein, mit dessen Hilfe die Kühlluft zwangsweise durch den Schwingarm geführt wird. Für den Fall, dass die Kühleinrichtung das Lüfterrad aufweist, das in der Kettenlaufrolle aufgenommen ist, kann auf das Gebläse verzichtet werden. In diesem Fall saugt das Lüfterrad die Kühlluft durch den Schwingarm an. Die Kühlluft wird vorzugsweise aus einem Innenraum des Kettenfahrzeugs angesaugt. Dies bringt im Vergleich zu einer Ansaugung aus der Umgebung den Vorteil, dass keine Verunreinigungen in die Kettenlaufrolle eingetragen werden.

Gemäß einer weiteren Ausführungsform ist der Kühlluftführungskanal mit Hilfe von flexiblen Kühlluftführungsbälgen in Fluidverbindung mit der Kettenlaufrolle.

Die Kühlluftführungsbälge können beispielsweise aus Gummi oder einem anderen elastomeren Werkstoff gefertigt sein. Dadurch, dass die Kühlluftführungsbälge flexibel sind, können Relativbewegungen der Kettenlaufrolle zu dem Schwingarm ausgeglichen werden.

Gemäß einer weiteren Ausführungsform umfasst die Kettenlaufrollenanordnung einen Laufrollendeckel, der die Kettenlaufrolle in Richtung des Schwingarms verschließt, wobei der Laufrollendeckel zumindest abschnittsweise aus einem faserverstärkten Kunststoffmaterial gefertigt ist.

Der Laufrollendeckel kann beispielsweise aus einem kohlenstofffaserverstärkten Kunststoffmaterial gefertigt sein. Es können jedoch auch beliebige andere Verstärkungsfasern eingesetzt werden. Ferner kann der Laufrollendeckel auch aus einem metallischen Werkstoff, beispielsweise aus einer Aluminiumlegierung, gefertigt sein. Der Laufrollendeckel kann Teil der Kettenlaufrolle sein. Vorzugsweise ist der Laufrollendeckel fest mit dem Schwingarm verbunden und kann sich bezüglich des Schwingarms nicht bewegen. Das heißt, dass sich die Kettenlaufrolle relativ zu dem Laufrollendeckel verdrehen kann. Zwischen dem Laufrollendeckel und der Kettenlaufrolle kann ein Dichtelement, beispielsweise in der Form eines Wellendichtrings, vorgesehen sein, so dass auch bei einer Drehbewegung der Kettenlaufrolle zu dem Laufrollendeckel keine Verschmutzungen zwischen dem Laufrollendeckel und der Kettenlaufrolle in den Innenraum der Kettenlaufrolle gelangen können. Der Laufrollendeckel umfasst vorzugsweise mehrere Kühllufteinlässe, welche mit Hilfe der Kühlluftführungsbälge mit dem Kühlluftführungskanal des Schwingarms in Fluidverbindung sind.

Weiterhin wird ein militärisches Kettenfahrzeug mit einer derartigen Kettenlaufrolle und/oder einer derartigen Kettenlaufrollenanordnung vorgeschlagen.

Wie zuvor erwähnt, kann das militärische Kettenfahrzeug bewaffnet oder unbewaffnet sein. Das militärische Kettenfahrzeug kann ein Schützenpanzer, ein Kampfpanzer, ein Bergepanzer oder ein beliebiges anderes militärisches Kettenfahrzeug sein. Beispielsweise umfasst das militärische Kettenfahrzeug einen drehbaren Turm mit einer Bewaffnung.

Die für die vorgeschlagene Kettenlaufrolle beschriebenen Ausführungsformen und Merkmale gelten für die vorgeschlagene Kettenlaufrollenanordnung und/oder das vorgeschlagene militärische Kettenfahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen der Kettenlaufrolle, der Kettenlaufrollenanordnung und/oder des militärischen Kettenfahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Kettenlaufrolle, der Kettenlaufrollenanordnung und/oder des militärischen Kettenfahrzeugs hinzufügen.

Weitere vorteilhafte Ausgestaltungen und Aspekte der Kettenlaufrolle, der Kettenlaufrollenanordnung und/oder des militärischen Kettenfahrzeugs sind Gegenstand der Unteransprüche sowie der im Folgenden beschriebenen Ausführungsbeispiele der Kettenlaufrolle, der Kettenlaufrollenanordnung und/oder des militärischen Kettenfahrzeugs. Im Weiteren werden die Kettenlaufrolle, die Kettenlaufrollenanordnung und/oder das militärische Kettenfahrzeug anhand von bevorzugten Ausführungsformen unter Bezugnahme auf die beigelegten Figuren näher erläutert.
- Fig. 1: zeigt eine schematische Ansicht einer Ausführungsform eines militärischen Kettenfahrzeugs;
- Fig. 2: zeigt eine schematische Schnittansicht einer Ausführungsform einer Kettenlaufrollenanordnung für das militärische Kettenfahrzeug gemäß Fig. 1;
- Fig. 3: zeigt eine schematische Schnittansicht einer weiteren Ausführungsform einer Kettenlaufrollenanordnung für das militärische Kettenfahrzeug gemäß Fig. 1;
- Fig. 4: zeigt eine schematische Schnittansicht einer weiteren Ausführungsform einer Kettenlaufrollenanordnung für das militärische Kettenfahrzeug gemäß Fig. 1; und
- Fig. 5: zeigt eine schematische Schnittansicht einer weiteren Ausführungsform einer Kettenlaufrollenanordnung für das militärische Kettenfahrzeug gemäß Fig. 1.

In den Figuren sind gleiche oder funktionsgleiche Elemente mit denselben Bezugszeichen versehen worden, sofern nichts anderes angegeben ist.

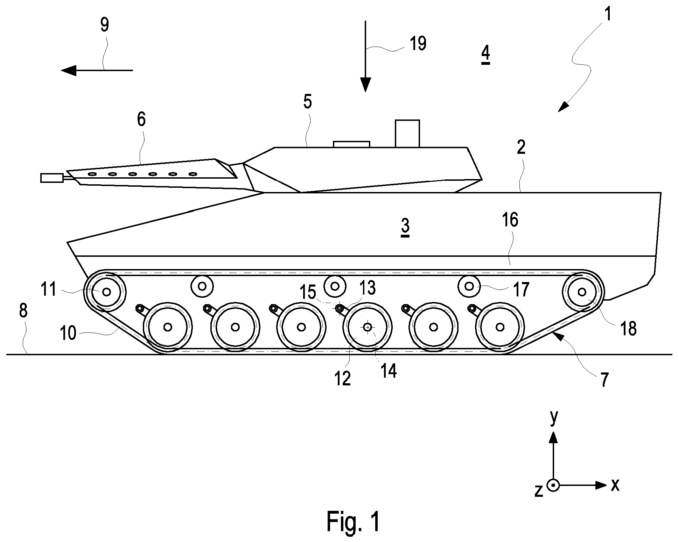

Die Fig. 1 zeigt eine schematische Seitenansicht einer Ausführungsform eines militärischen Kettenfahrzeugs 1. Das militärische Kettenfahrzeug 1 wird nachfolgend lediglich als Kettenfahrzeug bezeichnet. Das Kettenfahrzeug 1 ist ein hochgeschütztes Kettenfahrzeug. Hierzu weist das Kettenfahrzeug 1 eine Panzerung auf. Insbesondere kann das Kettenfahrzeug 1 ein Schützenpanzer sein. Das Kettenfahrzeug 1 kann jedoch auch ein Kampfpanzer, ein Bergepanzer oder dergleichen sein. Das Kettenfahrzeug 1 kann bewaffnet oder unbewaffnet sein.

Dem Kettenfahrzeug 1 ist ein Koordinatensystem mit einer Breitenrichtung oder x-Richtung x, einer Hochrichtung oder y-Richtung y und einer Tiefenrichtung oder z-Richtung z zugeordnet. Die Richtungen x, y, z sind senkrecht zueinander orientiert.

Das Kettenfahrzeug 1 umfasst eine geschützte Fahrgastzelle 2, in der eine Besatzung des Kettenfahrzeugs 1 Platz findet. Die Fahrgastzelle 2 ist gegen Beschuss, Sprengfallen, unkonventionelle Spreng- oder Brandvorrichtungen (USBV, Engl.: Improvised Explosive Devices, IED), Minen oder dergleichen geschützt. Die Fahrgastzelle 2 umschließt einen Innenraum 3, in dem sich die Besatzung aufhalten kann. Über Luken oder Türen kann der Innenraum 3 der Fahrgastzelle 2 von einer Umgebung 4 des Kettenfahrzeugs 1 aus betreten und wieder verlassen werden.

Das Kettenfahrzeug 1 kann einen Turm 5 mit einer Bewaffnung 6 aufweisen. Der Turm 5 ist drehbar an der Fahrgastzelle 2 gelagert. Der Turm 5 kann einen elektrischen oder hydraulischen Antrieb umfassen, um den Turm 5 zu drehen. Der Turm 5 kann jedoch auch manuell betrieben werden, falls der Antrieb ausfällt. Die Bewaffnung 6 kann eine Maschinenkanone oder dergleichen sein. Die Bewaffnung 6 kann eine Primärbewaffnung oder Hauptbewaffnung sein. Es kann zusätzlich eine Sekundärbewaffnung, beispielsweise in Form eines Maschinengewehrs, vorgesehen sein.

Das Kettenfahrzeug 1 umfasst ferner ein Kettenlaufwerk 7, mit dessen Hilfe sich das Kettenfahrzeug 1 auf einem Untergrund 8 in einer Fahrtrichtung 9 fortbewegen kann. Dies schließt jedoch nicht aus, dass sich das Kettenfahrzeug 1, beispielsweise in einem Rückwärtsgang, auch entgegengesetzt zu der Fahrtrichtung 9 fortbewegen kann. In der Orientierung der Fig. 1 ist die Fahrtrichtung 9 entgegen der x-Richtung x orientiert.

Das Kettenlaufwerk 7 umfasst eine umlaufende Kette 10, die von einer Antriebsrolle 11 angetrieben wird. Die Antriebsrolle 11 ist frontseitig vorgesehen. In der Orientierung der Fig. 1 läuft die Kette 10 bei einer Fortbewegung des Kettenfahrzeugs 1 in der Fahrtrichtung 9 entgegen dem Uhrzeigersinn um. Die Kette 10 kann eine Vielzahl miteinander verbundener Kettenglieder aufweisen, die beweglich miteinander verbunden sind. Die Kettenglieder sind aus einem metallischen Werkstoff, wie beispielsweise Stahl, gefertigt. Die Kette 10 kann jedoch auch eine Gummikette sein.

Die Antriebsrolle 11 ist mit einem Antrieb des Kettenfahrzeugs 1 wirkverbunden. Der Antrieb kann beispielsweise einen Verbrennungsmotor, insbesondere einen Dieselmotor, und ein Getriebe umfassen. Ferner umfasst das Kettenlaufwerk 7 eine Vielzahl von Kettenlaufrollen 12, von denen in der Fig. 1 nur eine mit einem Bezugszeichen versehen ist. Beispielsweise sind jeweils beidseits des Kettenfahrzeugs 1 sechs derartige Kettenlaufrollen 12 vorgesehen. Die Anzahl der Kettenlaufrollen 12 ist jedoch grundsätzlich beliebig.

Jeder Kettenlaufrolle 12 ist ein Schwingarm 13 zugeordnet, an dem die jeweilige Kettenlaufrolle 12 um eine Drehachse 14 drehbar gelagert ist. Jeder Schwingarm 13 wiederum ist um eine Drehachse 15 drehbar an einer Wanne 16 des Kettenfahrzeugs 1 gelagert. Die Wanne 16 kann Teil der Fahrgastzelle 2 sein oder fest mit dieser verbunden sein.

Die Schwingarme 13 sind jeweils mit Hilfe einer Torsionsfeder oder eines Torsionsstabs mit der Wanne 16 wirkverbunden, so dass die Kettenlaufrollen 12 bei der Bewältigung von Bodenunebenheiten in der y-Richtung y einfedern und entgegen der y-Richtung y ausfedern können. Die Schwingarme 13 können hierbei von einem ausgefederten Zustand, der in der Fig. 1 gezeigt ist, in einen eingefederten Zustand verbracht werden, in dem die jeweilige Kettenlaufrolle 12 entlang der y-Richtung y nach oben bewegt ist.

Bei dem Verbringen des jeweiligen Schwingarms 13 von dem ausgefederten Zustand in den eingefederten Zustand, wird der jeweilige Torsionsstab in sich verdreht, also tordiert. Das heißt, dass zum Verbringen des jeweiligen Schwingarms 13 von dem ausgefederten Zustand in den eingefederten Zustand eine Kraft beziehungsweise ein Drehmoment erforderlich ist. In dem eingefederten Zustand ist der Torsionsstab demgemäß unter einer Vorspannung, insbesondere einer Federvorspannung. Dies führt dazu, dass die Schwingarme 13 in Richtung des ausgefederten Zustands federvorgespannt sind. Demgemäß bewegen sich die Schwingarme 13 dann, wenn keine Kraft oder kein Drehmoment auf den jeweiligen Schwingarm 13 wirkt, selbsttätig von dem eingefederten Zustand zurück in den ausgefederten Zustand.

Ferner umfasst das Kettenlaufwerk 7 mehrere Stützrollen 17, von denen in der Fig. 1 nur eine mit einem Bezugszeichen versehen ist. Beispielsweise sind drei derartige Stützrollen 17 vorgesehen. Die Stützrollen 17 sind optional. Weiterhin umfasst das Kettenlaufwerk 7 eine Umlenkrolle 18. Die Umlenkrolle 18 ist heckseitig vorgesehen. Umgekehrt kann die Antriebsrolle 11 auch heckseitig und die Umlenkrolle 18 frontseitig angeordnet sein. Eine in der Fig. 1 mit einem Pfeil angedeutete Schwerkraftrichtung 19 ist entgegengesetzt zu der y-Richtung y orientiert. Das Kettenlaufwerk 7 kann von einer in der Fig. 7 nicht gezeigten Abdeckung zumindest abschnittsweise abgedeckt sein. Die Abdeckung deckt das Kettenlaufwerk 7 seitlich ab. Beispielsweise deckt die Abdeckung das Kettenlaufwerk 7 bis etwa auf Höhe der Drehachse 14 ab.

Das Kettenlaufwerk 7 umfasst vorzugsweise zwei Ketten 10, die entlang der Fahrtrichtung 9 betrachtet beidseits des Kettenfahrzeugs 1 angeordnet sind. Dementsprechend umfasst das Kettenlaufwerk 7 auch ein Paar beidseits des Kettenfahrzeugs 1 angeordnete Antriebsrollen 11, eine beliebige Anzahl von Kettenlaufrollen 12 mit Schwingarmen 13, die ebenfalls beidseits des Kettenfahrzeugs 1 angeordnet sind, ein Paar an Stützrollen 17 sowie ein Paar an Umlenkrollen 18.

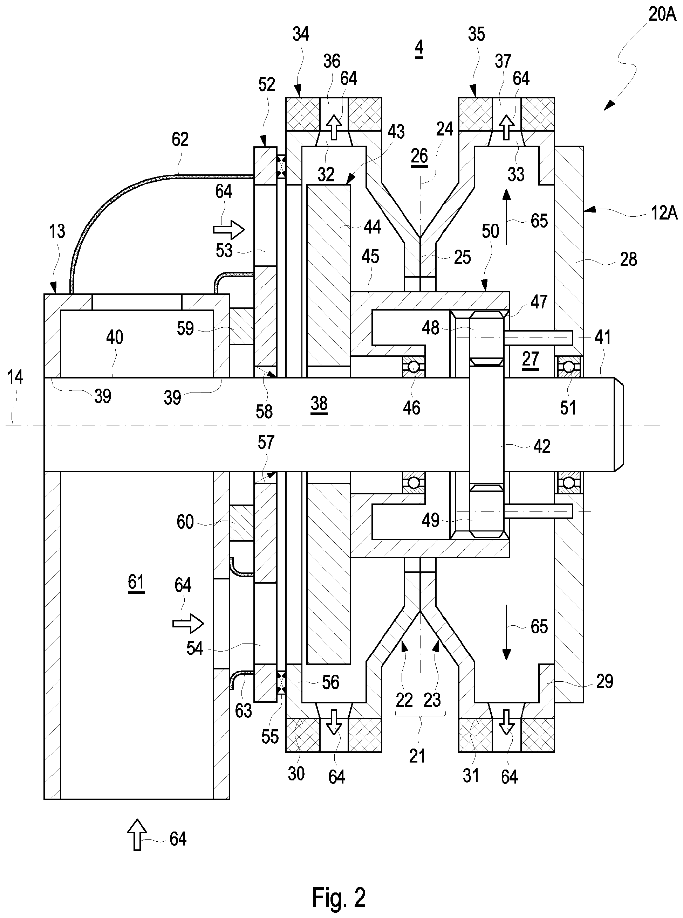

Die Fig. 2 zeigt eine schematische Schnittansicht einer Ausführungsform einer Kettenlaufrollenanordnung 20A für das Kettenfahrzeug 1. Die Kettenlaufrollenanordnung 20A umfasst eine Kettenlaufrolle 12A sowie einen wie zuvor erwähnten Schwingarm 13, der mit Hilfe einer Torsionsfeder oder eines Torsionsstabs mit der Wanne 16 verbunden ist. Die Kettenlaufrolle 12A ist um die zuvor erwähnte Drehachse 14 drehbar an dem Schwingarm 13 gelagert. Das Kettenlaufwerk 7 umfasst eine Vielzahl derartiger Kettenlaufrollenanordnungen 20A, die beidseits des Kettenfahrzeugs 1 angeordnet sind.

Die Kettenlaufrolle 12A umfasst einen Laufrollenkörper 21, der zumindest abschnittsweise aus einem faserverstärkten Kunststoffmaterial gefertigt ist. Beispielsweise ist der Laufrollenkörper 21 aus einem kohlenstofffaserverstärkten Kunststoffmaterial gefertigt. "Zumindest abschnittsweise" heißt vorliegend, dass der Laufrollenkörper 21 zumindest teilweise aus dem faserverstärkten Kunststoffmaterial gefertigt ist. Dies schließt jedoch nicht aus, dass der Laufrollenkörper 21 auch metallische Komponenten aufweisen kann. Bevorzugt ist der Laufrollenkörper 21 jedoch vollständig aus dem faserverstärkten Kunststoffmaterial gefertigt.

Das faserverstärkte Kunststoffmaterial umfasst Verstärkungsfasern, beispielsweise Kohlenstofffasern, und eine Matrix, in der die Verstärkungsfasern eingebettet sind. Als Matrix kommen beispielsweise Epoxidharze, beliebige andere Duroplaste oder auch Thermoplaste zur Anwendung. Vorzugsweise sind die Verstärkungsfasern Endlosfasern. Die Verstärkungsfasern können neben Kohlenstofffasern auch Glasfasern, Aramidfasern, Borfasern oder dergleichen umfassen. Es kann auch ein Gemisch unterschiedlicher Verstärkungsfasertypen eingesetzt werden.

Der Laufrollenkörper 21 ist rotationssymmetrisch zu der Drehachse 14 aufgebaut. Der Laufrollenkörper 21 umfasst eine innere oder erste Laufrollenhälfte 22 sowie eine äußere oder zweite Laufrollenhälfte 23. "Innere" und "äußere" ist hier in Bezug auf den Schwingarm 13 zu sehen. Die erste Laufrollenhälfte 22 ist näher an dem Schwingarm 13 positioniert als die zweite Laufrollenhälfte 23. Das heißt, dass die erste Laufrollenhälfte 22 zwischen dem Schwingarm 13 und der zweiten Laufrollenhälfte 23 angeordnet ist. Auch die Laufrollenhälften 22, 23 sind jeweils rotationssymmetrisch zu der Drehachse 14 aufgebaut. Die beiden Laufrollenhälften 22, 23 sind koaxial zueinander angeordnet.

Die Laufrollenhälften 23, 22 sind spiegelsymmetrisch zu einer Ebene 24 aufgebaut. Die Ebene 24 ist senkrecht zu der Drehachse 14 orientiert. Beispielsweise wird die Ebene 24 von der x-Richtung x und der y-Richtung y aufgespannt. Die Laufrollenhälften 22, 23 können an einer Schnittstelle 25 fest miteinander verbunden sein. Die Schnittstelle 25 läuft scheibenförmig um die Drehachse 14 um.

Die Laufrollenhälften 22, 23 werden somit an der Schnittstelle 25 zu dem Laufrollenkörper 21 zusammengefügt.

Insbesondere können die Laufrollenhälften 22, 23 an der Schnittstelle 25 stoffschlüssig miteinander verbunden sein. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Stoffschlüssig kann beispielsweise durch Kleben verbunden werden. Das heißt, dass die Laufrollenhälften 22, 23 an der Schnittstelle 25 miteinander verklebt sein können. Die Laufrollenhälften 22, 23 können zusätzlich oder alternativ an der Schnittstelle 25 auch miteinander verschraubt oder vernietet sein.

Jede Laufrollenhälften 22, 23 bildet ein einstückiges, insbesondere ein materialeinstückiges, Bauteil. "Einstückig" oder "einteilig" bedeutet vorliegend, dass die Laufrollenhälften 22, 23 jeweils nicht aus mehreren einzelnen Bauteilen oder Komponenten aufgebaut sind, sondern ein gemeinsames Bauteil oder eine gemeinsame Komponente bilden. "Materialeinstückig" bedeutet vorliegend, dass die Laufrollenhälften 22, 23 jeweils durchgehend aus demselben Material gefertigt sind. Die beiden Laufrollenhälften 22, 23 werden dann an der Schnittstelle 25 zu einem Bauteil, nämlich dem Laufrollenkörper 21, gefügt.

Alternativ kann auch der Laufrollenkörper 21 selbst ein einstückiges, insbesondere ein materialeinstückiges, Bauteil sein. In diesem Fall ist es nicht erforderlich, die Laufrollenhälften 22, 23 zunächst als separate Bauteile zu fertigen und dann an der Schnittstelle 25 zu dem Laufrollenkörper 21 zu fügen, sondern der Laufrollenkörper 21 wird als einstückiges Bauteil gefertigt, das die beiden Laufrollenhälften 22, 23 aufweist. Ein nachträgliches Zusammenfügen der Laufrollenhälften 22, 23 ist also verzichtbar.

Zwischen den Laufrollenhälften 22, 23 ist eine vollständig um die Drehachse 14 umlaufende V-förmige Führungsnut 26 zum Führen der Kette 10 vorgesehen. Die Kette 10 ist zumindest abschnittsweise in der Führungsnut 26 aufgenommen.

Der Laufrollenkörper 21 umschließt einen Innenraum 27 der Kettenlaufrolle 12A. Die Kettenlaufrolle 12A ist somit hohl. Außenseitig, das heißt dem Schwingarm 13 beziehungsweise der Wanne 16 abgewandt, umfasst die Kettenlaufrolle 12A einen plattenförmigen Laufrollenträger 28. Der Laufrollenträger 28 ist ebenfalls aus einem faserverstärkten Kunststoffmaterial, insbesondere aus einem kohlenstofffaserverstärkten Kunststoffmaterial, gefertigt. Der Laufrollenträger 28 begrenzt den Innenraum 27 in der Orientierung der Fig. 2 nach rechts. Die zweite Laufrollenhälfte 23 ist zwischen der ersten Laufrollenhälfte 22 und dem Laufrollenträger 28 platziert.

Der Laufrollenträger 28 kann beispielsweise mit der zweiten Laufrollenhälfte 23 stoffschlüssig verbunden, insbesondere verklebt, sein. Hierzu weist die zweite Laufrollenhälfte 23 einen ringförmigen, um die Drehachse 14 umlaufenden Flansch 29 auf, mit dem der Laufrollenträger 28 fest verbunden ist. Der Laufrollenträger 28 ist insbesondere stoffschlüssig mit dem Flansch 29 verbunden. Die zweite Laufrollenhälfte 23 und der Laufrollenträger 28 können auch als einstückiges, insbesondere als materialeinstückiges, Bauteil ausgeführt sein.

Der Laufrollenkörper 21 beziehungsweise die Laufrollenhälften 22, 23 weisen um die Drehachse 14 vollständig umlaufende zylinderförmige Außenflächen 30, 31 auf. Dabei ist der ersten Laufrollenhälfte 22 eine erste Außenfläche 30 zugeordnet. Dementsprechend ist der zweiten Laufrollenhälfte 23 eine zweite Außenfläche 31 zugeordnet.

Die Außenflächen 30, 31 werden durch eine Vielzahl den Laufrollenkörper 21 beziehungsweise die Laufrollenhälften 22, 23 durchlaufende Kühlluftdüsen 32, 33 durchbrochen. Die Kühlluftdüsen 32, 33 verlaufen radial. "Radial" heißt vorliegend senkrecht zu der Drehachse 14 und von dieser weg orientiert. Die Kühlluftdüsen 32, 33 weisen bevorzugt eine kegelstumpfförmige oder konusförmige Geometrie auf und verjüngen sich ausgehend von dem Innenraum 27 hin zu den Außenflächen 30, 31. "Verjüngen" heißt dabei, dass sich ein Querschnitt oder eine Querschnittsfläche der Kühlluftdüsen 32, 33 ausgehend von dem Innenraum 27 hin zu den Außenflächen 30, 31 verkleinert.

Die Anzahl der Kühlluftdüsen 32, 33 ist beliebig. Die Kühlluftdüsen 32, 33 sind vorzugsweise gleichmäßig um einen Umfang der jeweiligen Außenfläche 30, 31 gleichmäßig verteilt angeordnet. Die Kühlluftdüsen 32, 33 verbinden den Innenraum 27 fluidisch mit der Umgebung 4. Mit anderen Worten sorgen die Kühlluftdüsen 32, 33 für eine Fluidverbindung zwischen dem Innenraum 27 und der Umgebung 4. Dass die Kühlluftdüsen 32, 33 den Innenraum 27 "fluidisch" mit der Umgebung 4 verbinden beziehungsweise, dass zwischen dem Innenraum 27 und der Umgebung 4 eine "Fluidverbindung" vorliegt, bedeutet vorliegend insbesondere, dass ein Fluid, beispielsweise Kühlluft, von dem Innenraum 27 durch die Kühlluftdüsen 32, 33 hindurch hin zu der Umgebung 4 strömen kann.

Die Kettenlaufrolle 12A umfasst weiterhin zwei um den Laufrollenkörper 21 umlaufende Laufrollenbandagen 34, 35, die aus einem Elastomer, insbesondere aus Gummi, gefertigt sind. Beispielsweise sind die Laufrollenbandagen 34, 35 aus einem natürlichem oder einem synthetischen Kautschuk gefertigt. Unter einer "Laufrollenbandage" ist vorliegend ein umfänglich geschlossenes ringförmiges Bauteil zu verstehen, das vollständig um die Drehachse 14 umläuft. Die Laufrollenbandagen 34, 35 können faserverstärkt sein.

Der ersten Außenfläche 30 der ersten Laufrollenhälfte 22 ist eine erste Laufrollenbandage 34 zugeordnet. Der zweiten Außenfläche 31 der zweiten Laufrollenhälfte ist dementsprechend eine zweite Laufrollenbandage 35 zugeordnet. Die Laufrollenbandagen 34, 35 sind mit der jeweiligen Außenfläche 30, 31 stoffschlüssig verbunden. Insbesondere sind die Laufrollenbandagen 34, 35 auf die Außenflächen 30, 31 aufgeklebt oder aufvulkanisiert.

Die Laufrollenbandagen 34, 35 sind gelocht. Das heißt, dass die Laufrollenbandagen 34, 35 Kühlluftdurchbrüche oder Kühlluftdurchlässe 36, 37 aufweisen, die den Kühlluftdüsen 32, 33 zugeordnet sind. Insbesondere ist jedem Kühlluftdurchlass 36, 37 eine Kühlluftdüse 32, 33 zugeordnet. Die Kühlluftdüsen 32, 33 münden in die Kühlluftdurchlässe 36, 37 ein. Es ist eine beliebige Anzahl von Kühlluftdurchlässen 36, 37 vorgesehen, die gleichmäßig über einen Umfang der jeweiligen Laufrollenbandage 34, 35 verteilt angeordnet sind. Dabei entspricht die Anzahl der Kühlluftdurchlässe 36, 37 der Anzahl der Kühlluftdüsen. Das heißt, dass jeder Kühlluftdüse 32, 33 ein Kühlluftdurchlass 36, 37 zugeordnet ist.

Die Kettenlaufrolle 12 ist um die Drehachse 14 drehbar an einer Laufrollenachse 38 gelagert. Die Laufrollenachse 38 wiederum ist in dem Schwingarm 13 drehfest gelagert. Das heißt, dass sich die Laufrollenachse 38 gegenüber dem Schwingarm 13 nicht verdrehen kann. Der Schwingarm 13 umfasst eine Ausnehmung 39 zum Aufnehmen eines ersten Endabschnitts 40 der Laufrollenachse 38. Beispielsweise ist der erste Endabschnitt 40 in die Ausnehmung 39 eingepresst.

Der erste Endabschnitt 40 kann jedoch auch formschlüssig mit dem Schwingarm 13 verbunden sein. Eine formschlüssige Verbindung entsteht durch das Ineinander- oder Hintergreifen von mindestens zwei Verbindungspartnern. Beispielsweise können die Ausnehmung 39 und der erste Endabschnitt 40 jeweils eine geeignete Verzahnung aufweisen. Diese Verzahnungen greifen ineinander, um die Laufrollenachse 38 an dem Schwingarm 13 festzulegen. An einem dem ersten Endabschnitt 40 abgewandten zweiten Endabschnitt 41 der Laufrollenachse 38 ist ein Sonnenrad 42 angeformt. Das Sonnenrad 42 ist einteilig, insbesondere materialeinstückig, mit der Laufrollenachse 38 ausgebildet. Das Sonnenrad 42 kann auch auf die Laufrollenachse 38 aufgeschrumpft sein.

Ferner umfasst die Kettenlaufrolle 12A eine Kühleinrichtung 43 zum Kühlen der Laufrollenbandagen 34, 35 im Betrieb der Kettenlaufrolle 12A. Insbesondere ist die Kühleinrichtung 43 dazu eingerichtet, die Laufrollenbandagen 34, 35 aktiv zu kühlen. "Aktiv" bedeutet vorliegend, dass die Kühleinrichtung 43 dazu geeignet ist, eine Kühlluftströmung zu erzeugen oder zu erzwingen, welche die Kühlluftdüsen 32, 33 und die Kühlluftdurchlässe 36, 37 durchströmt, um die Laufrollenbandagen 34, 35 durch ein Abführen von Wärme zu kühlen.

Die Kühleinrichtung 43 umfasst ein Lüfterrad 44, das in dem Innenraum 27 der Kettenlaufrolle 12A angeordnet ist. Das heißt, das Lüfterrad 44 ist innerhalb der Kettenlaufrolle 12A beziehungsweise innerhalb des Laufrollenkörpers 21 platziert. Das Lüfterrad 44 ist dazu geeignet, um die feststehende Laufrollenachse 38 umzulaufen. Das Lüfterrad 44 wird von einem Lüfterradträger 45 getragen. Der Lüfterradträger 45 wiederum ist mit Hilfe eines Lagers 46 drehbar an der Laufrollenachse 38 gelagert. Es können mehrere derartige Lager 46 vorgesehen sein. Das Lager 46 kann ein Wälzlager oder ein Gleitlager sein.

Ferner ist an den Lüfterradträger 45 ein Hohlrad 47 angeformt. Das Hohlrad 47 läuft mit dem Lüfterrad 44 um das feststehende Sonnenrad 42 um. Zwischen dem Sonnenrad 42 und dem Hohlrad 47 sind mehrere Planetenräder 48, 49 vorgesehen. Beispielsweise sind drei derartige Planetenräder 48, 49 vorgesehen. Die Planetenräder 48, 49 sind beispielsweise an dem Laufrollenträger 28 drehbar gelagert. Das Sonnenrad 42, das Hohlrad 47 und die Planetenräder 48, 49 sind Teil eines Planetengetriebes 50 der Kühleinrichtung 43. Das Planetengetriebe 50 ist ebenfalls in dem Innenraum 27 platziert, so dass die Kettenlaufrolle 12A beziehungsweise der Laufrollenkörper 21 das Planetengetriebe 50 umschließt.

Die Kettenlaufrolle 12A ist mit Hilfe eines Lagers 51 drehbar an der Laufrollenachse 38 gelagert. Insbesondere ist der Laufrollenträger 28 mit Hilfe des Lagers 51 drehbar an der Laufrollenachse 38 gelagert. Das Lager 51 kann ein Wälzlager oder ein Gleitlager sein. Es kann mehr als ein Lager 51 vorgesehen sein.

Die Kettenlaufrollenanordnung 20A beziehungsweise die Kettenlaufrolle 12A umfasst weiterhin einen Laufrollendeckel 52, der vorzugsweise ebenfalls aus einem faserverstärkten Kunststoffmaterial, insbesondere aus einem kohlenstofffaserverstärkten Kunststoffmaterial, gefertigt ist. Der Laufrollendeckel 52 steht bezüglich der Kettenlaufrolle 12A fest. Insbesondere verdreht sich der Laufrollendeckel 52 gegenüber der Laufrollenachse 38 nicht.

Der Laufrollendeckel 52 umfasst Kühllufteinlässe 53, 54. Die Kühllufteinlässe 53, 54 durchbrechen den Laufrollendeckel 52. Die Anzahl der Kühllufteinlässe 53, 54 ist beliebig. Vorzugsweise sind die Kühllufteinlässe 53, 54 gleichmäßig um die Drehachse 14 herum verteilt angeordnet. Der Laufrollendeckel 52 ist vorzugsweise rotationssymmetrisch zu der Drehachse 14 aufgebaut.

Der Laufrollendeckel 52 ist mit Hilfe eines Dichtelements 55 gegenüber der Kettenlaufrolle 12A beziehungsweise dem Laufrollenkörper 21, insbesondere gegenüber der ersten Laufrollenhälfte 22, abgedichtet. Hierzu kann die erste Laufrollenhälfte 22 einen umlaufenden Flansch 56 aufweisen, gegenüber dem das Dichtelement 55 abdichtet. Das Dichtelement 55 kann beispielsweise ein Wellendichtring oder dergleichen sein.

Ferner ist ein mittig an dem Laufrollendeckel 52 vorgesehener Durchbruch 57, durch den die Laufrollenachse 38 hindurchgeführt ist, mit Hilfe eines Dichtelements 58 gegenüber der Laufrollenachse 38 abgedichtet. Das Dichtelement 58 ist beispielsweise ein Wellendichtring. Der Laufrollendeckel 52 ist mit Hilfe von Befestigungselementen 59, 60 drehfest mit dem Schwingarm 13 verbunden.

Der Schwingarm 13 weist einen innenliegenden Kühlluftführungskanal 61 auf. Der Kühlluftführungskanal 61 ist mit Hilfe von Kühlluftführungsbälgen 62, 63 mit den Kühllufteinlässen 53, 54 des Laufrollendeckels 52 in Fluidverbindung. Die Kühlluftführungsbälge 62, 63 führen somit von dem Kühlluftführungskanal 61 zu den Kühllufteinlässen 53, 54. Die Anzahl der Kühlluftführungsbälge 62, 63 entspricht der Anzahl der Kühllufteinlässe 53, 54

Die Funktionalität der Kettenlaufrolle 12A beziehungsweise der Kettenlaufrollenanordnung 20A wird nachfolgend erläutert. Im Fahrbetrieb des Kettenfahrzeugs 1 wird dem Schwingarm 13 Kühlluft 64 zugeführt. Hierzu kann beispielsweise innerhalb des Kettenfahrzeugs 1 ein Gebläse oder dergleichen vorgesehen sein. Alternativ kann die Kühlluft 64 auch von der Kühleinrichtung 43 durch den Schwingarm 13, insbesondere durch den Kühlluftführungskanal 61, hindurch angesaugt werden.

Die Kühlluft 64 wird über den Kühlluftführungskanal 61, die Kühlluftzuführungsbälge 62, 63 und die Kühllufteinlässe 53, 54 dem Innenraum 27 der Kettenlaufrolle 12A beziehungsweise des Laufrollenkörpers 21 zugeführt. Da sich die Kettenlaufrolle 12A im Fahrbetrieb des Kettenfahrzeugs 1 um die Laufrollenachse 38 dreht, wird das Lüfterrad 44 über das Planetengetriebe 50 um die Drehachse 14 in Rotation versetzt. Dabei sorgt das Planetengetriebe 50 für eine geeignete Übersetzung, so dass sich das Lüfterrad 44 beispielsweise schneller um die Drehachse 14 dreht als die Kettenlaufrolle 12A selbst. Hierdurch wird auch bei niedrigen Geschwindigkeiten des Kettenfahrzeugs 1 eine ausreichende Menge an Kühlluft 64 gefördert.

Die Kühlluft 64 wird mit Hilfe des Lüfterrads 44 durch die Kühlluftdüsen 32, 33 und die Kühlluftdurchlässe 36, 37 von dem Innenraum 27 in die Umgebung 4 gefördert. Hierbei werden die Laufrollenbandagen 34, 35 abgekühlt, indem mit Hilfe der Kühlluft 64 Wärme von den Laufrollenbandagen 34, 35 abgeführt wird.

Eine Strömungsrichtung 65 der Kühlluft 64 ist dabei immer von dem Innenraum 27 hin zu der Umgebung 4 orientiert. Hierdurch wird verhindert, dass beispielsweise Staub oder sonstige Verunreinigungen in den Innenraum 27 gelangen können und so die Kettenlaufrolle 12A verschmutzen. In dem Innenraum 27 herrscht insbesondere ein höherer Druck als in der Umgebung 4. Die Strömungsrichtung 65 ist dabei radial von der Drehachse 14 weggerichtet. Die Strömungsrichtung 65 ist insbesondere von der Drehachse 14 in Richtung der Außenflächen 30, 31 orientiert.

Dadurch, dass die Laufrollenbandagen 34, 35 mit Hilfe der durchströmenden Kühlluft 64 aktiv gekühlt werden, kann eine Überhitzung und damit ein Ablösen der Laufrollenbandagen 34, 35 von den Außenflächen 30, 31 verhindert oder zumindest verzögert werden. Ferner kann ein geringeres Temperaturniveau der Kette 10 erzielt werden. Dies ist insbesondere dann vorteilhaft, wenn für die Kette 10 als Werkstoff Gummi oder dergleichen verwendet wird. Es ergibt sich dadurch eine geringere Aufheizung der Kette 10 durch die Walkarbeit im Fahrbetrieb des Kettenfahrzeugs 1.

Dadurch ist der Einsatz leichter Ketten 10 aus Gummi auch für Kettenfahrzeuge 1 mit einem Gefechtsgewicht von über 50 t möglich. Bei der Verwendung einer aus Gummi gefertigten Kette 10 ergibt sich im Vergleich zu einer aus Stahl gefertigten Kette 10 eine Gewichtsersparnis von etwa 70 kg pro Meter Kette 10. Ferner ergibt sich durch die Verwendung des faserverstärkten Kunststoffmaterials zum Herstellen der Kettenlaufrolle 12A gegenüber der Verwendung eines metallischen Werkstoffs, wie beispielsweise Stahl, eine Gewichtsersparnis von etwa 10 kg pro Kettenlaufrolle 12A.

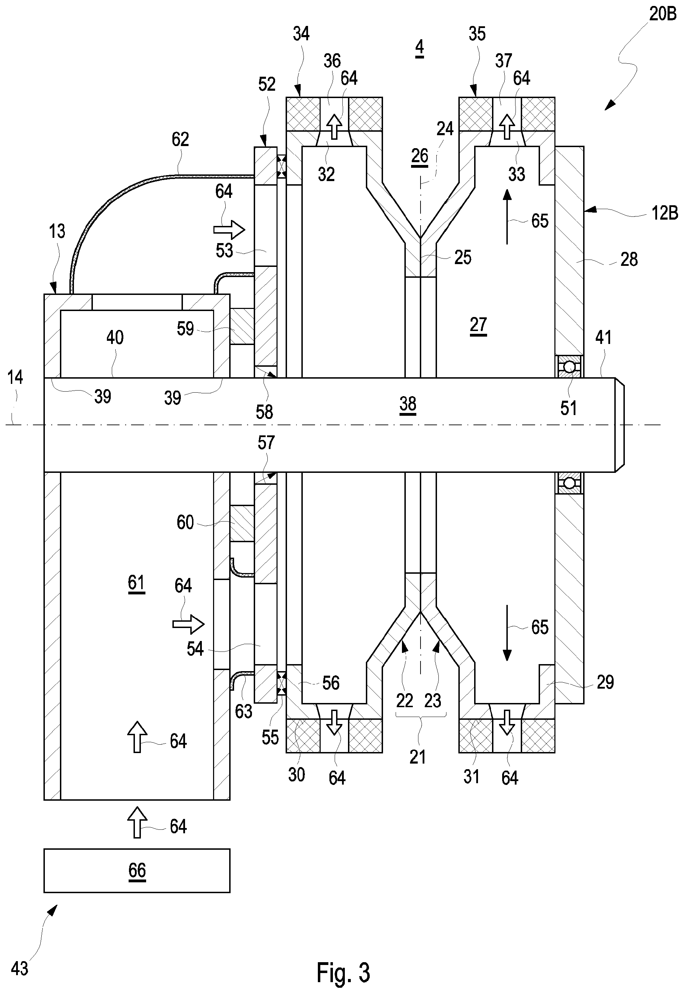

Die Fig. 3 zeigt eine schematische Schnittansicht einer weiteren Ausführungsform einer Kettenlaufrollenanordnung 20B mit einer Kettenlaufrolle 12B. Die Kettenlaufrollenanordnung 20B beziehungsweise die Kettenlaufrolle 12B unterscheidet sich von der Kettenlaufrollenanordnung 20A beziehungsweise von der Kettenlaufrolle 12A lediglich dadurch, dass die Kettenlaufrolle 12B kein Lüfterrad 44 und kein Planetengetriebe 50 aufweist. Nachfolgend wird nur auf Unterschiede der Kettenlaufrollen 12A, 12B eingegangen.

Die Kettenlaufrolle 12B umfasst eine Kühleinrichtung 43, welche allein durch die Kühlluftdüsen 32, 33 des Laufrollenkörpers 21 und die Kühlluftdurchlässe 36, 37 der Laufrollenbandagen 34, 35 verwirklicht wird. Die Kühleinrichtung 43 kann beispielsweise ferner ein externes Gebläse 66 umfassen, welches über den Kühlluftführungskanal 61 des Schwingarms 13, die Kühlluftführungsbälge 62, 63, die Kühllufteinlässe 53, 54 und den Innenraum 27 die Kühlluftdüsen 32, 33 mit Kühlluft 64 versorgt. Das Gebläse 66 ist jedoch optional und muss nicht Teil der Kühleinrichtung 43 sein. Ein Gebläse 66 kann mehrere Schwingarme 13 mit Kühlluft 64 versorgen. Die Verwendung des Gebläses 66 weist den Vorteil auf, dass der Kettenlaufrolle 12B auch im Stillstand des Kettenfahrzeugs 1 Kühlluft 64 zugeführt werden kann.

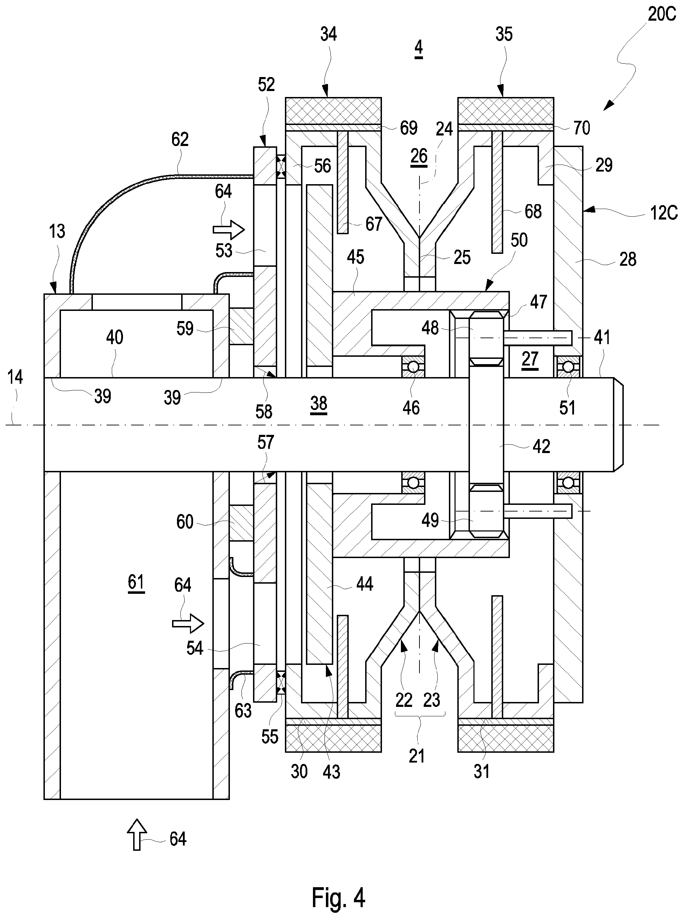

Die Fig. 4 zeigt eine schematische Schnittansicht einer weiteren Ausführungsform einer Kettenlaufrollenanordnung 20C mit einer Kettenlaufrolle 12C. Die Kettenlaufrollenanordnung 20C beziehungsweise die Kettenlaufrolle 12C entspricht von ihrem Aufbau her im wesentlichem dem der Kettenlaufrollenanordnung 20A beziehungsweise der Kettenlaufrolle 12A.

Die Kettenlaufrolle 12C umfasst ein wie zuvor erläutertes Lüfterrad 44 und ein Planetengetriebe 50. Im Gegensatz zu den Kettenlaufrollen 12A, 12B umfasst die Kettenlaufrolle 12C beziehungsweise der Laufrollenkörper 21 der Kettenlaufrolle 12C keine Kühlluftdüsen 32, 33. Auch sind die Laufrollenbandagen 34, 35 nicht gelocht, wobei eine Lochung der Laufrollenbandagen 34, 35 jedoch nicht grundsätzlich ausgeschlossen ist.

Stattdessen sind den Laufrollenbandagen 34, 35 Kühllamellen 67, 68 zugeordnet, die Teil der Kühleinrichtung 43 sind. Dabei ist eine erste Kühllamelle 67 der ersten Laufrollenhälfte 22 zugeordnet. Eine zweite Kühllamelle 68 ist der zweiten Laufrollenhälfte 23 zugeordnet. Die Kühllamellen 67, 68 können scheibenförmig sein und erstrecken sich ausgehend von den Außenflächen 30, 31 in den Innenraum 27 des Laufrollenkörpers 21 hinein. Die Kühllamellen 67, 68 können beispielsweise aus einem gut wärmeleitenden metallischen Werkstoff, wie beispielsweise Aluminium oder Kupfer, gefertigt sein. Aus Gewichtsgründen kommt bevorzugt Aluminium zum Einsatz.

Die Kühllamellen 67, 68 können auch sogenannte Wärmerohre (Engl.: Heat Pipe) sein oder Wärmerohre aufweisen. Unter einem "Wärmerohr" oder einer "Heat Pipe" ist vorliegend ein Wärmeübertrager zu verstehen, der unter Nutzung von Verdampfungswärme eines Mediums eine hohe Wärmestromdichte erlaubt. Auf diese Weise können große Wärmemengen auf einer kleinen Querschnittsfläche transportiert werden. Die Wärme kann also gut von den Laufrollenbandagen 34, 35 abgeführt werden.

Mit Hilfe des Lüfterrades 44 wird im Betrieb der Kettenlaufrolle 12C den Kühllamellen 67, 68 die Kühlluft 64 zugeführt, um Wärme von den Kühllamellen 67, 68 abzuführen. Die Kühllamellen 67, 68 sind mit Hilfe von Wärmeleitschichten 69, 70 an die Laufrollenbandagen 34, 35 angekoppelt. Dabei ist der ersten Kühllamelle 67 eine erste Wärmeleitschicht 69 und der zweiten Kühllamelle 68 eine zweite Wärmeleitschicht 70 zugeordnet. Die Wärmeleitschichten 69, 70 können beispielsweise eine Wärmeleitpaste, insbesondere eine Kupferpaste, umfassen. Ferner können die Wärmeleitschichten 69, 70 auch auf den Außenflächen 30, 31 aufgebrachte metallische Auflagen, beispielsweise aus Aluminium oder Kupfer, sein.

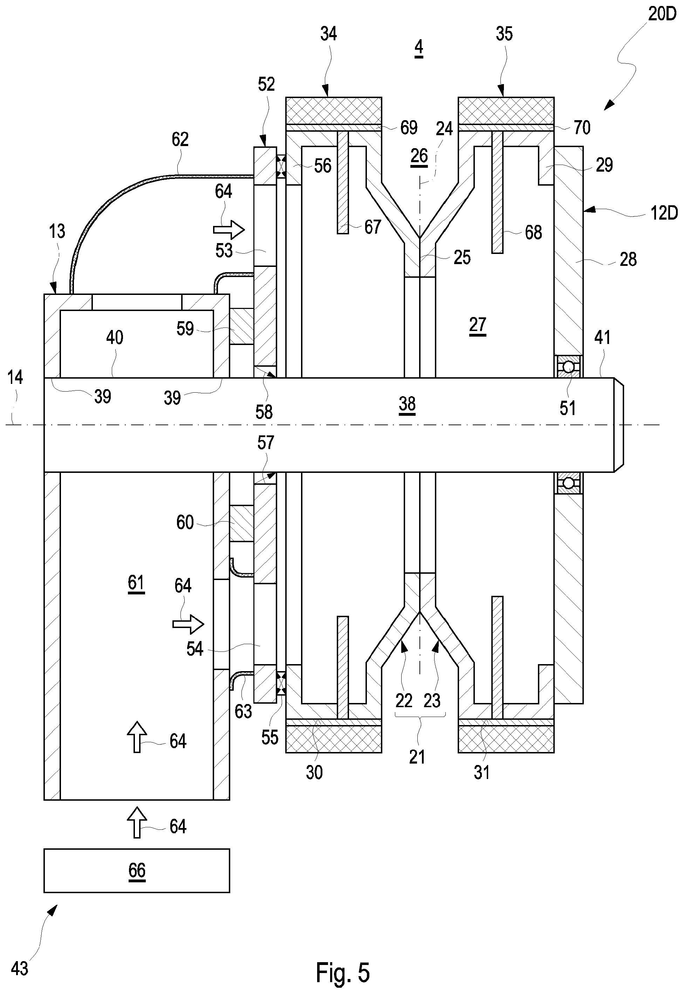

Die Fig. 5 zeigt eine schematische Schnittansicht einer weiteren Ausführungsform einer Kettenlaufrollenanordnung 20D mit einer Kettenlaufrolle 12D. Im Unterschied zu der Kettenlaufrollenanordnung 20C beziehungsweise zu der Kettenlaufrolle 12C umfasst die Kettenlaufrollenanordnung 20D beziehungsweise die Kettenlaufrolle 12D kein Lüfterrad 44 und auch kein Planetengetriebe 50.

In diesem Fall werden die Kühllamellen 67, 68 über den Kühlluftführungskanal 61 des Schwingarms 13, die Kühlluftführungsbalg 62, 63, die Kühlluftdurchlässe 53, 54 des Laufrollendeckels 52 und den Innenraum 27 mit Kühlluft 64 versorgt. Die Kühlluft 64 kann dabei über ein wie zuvor schon erläutertes Gebläse 66 zwangsweise zugeführt werden. Durch den Verzicht auf das Lüfterrad 44 und das Planetengetriebe 50 ergibt sich eine Gewichtsersparnis.

Obwohl die vorliegende Erfindung anhand von Ausführungsbeispielen beschrieben wurde, ist sie vielfältig modifizierbar.

### BEZUGSZEICHENLISTE

- 1: Kettenfahrzeug
- 2: Fahrgastzelle
- 3: Innenraum
- 4: Umgebung
- 5: Turm
- 6: Bewaffnung
- 7: Kettenlaufwerk
- 8: Untergrund
- 9: Fahrtrichtung
- 10: Kette
- 11: Antriebsrolle
- 12: Kettenlaufrolle
- 12A: Kettenlaufrolle
- 12B: Kettenlaufrolle
- 12C: Kettenlaufrolle
- 12D: Kettenlaufrolle
- 13: Schwingarm
- 14: Drehachse
- 15: Drehachse
- 16: Wanne
- 17: Stützrolle
- 18: Umlenkrolle
- 19: Schwerkraftrichtung
- 20A: Kettenlaufrollenanordnung
- 20B: Kettenlaufrollenanordnung
- 20C: Kettenlaufrollenanordnung
- 20D: Kettenlaufrollenanordnung
- 21: Laufrollenkörper
- 22: Laufrollenhälfte
- 23: Laufrollenhälfte
- 24: Ebene
- 25: Schnittstelle
- 26: Führungsnut
- 27: Innenraum
- 28: Laufrollenträger
- 29: Flansch
- 30: Außenfläche
- 31: Außenfläche
- 32: Kühlluftdüse
- 33: Kühlluftdüse
- 34: Laufrollenbandage
- 35: Laufrollenbandage
- 36: Kühlluftdurchlass
- 37: Kühlluftdurchlass
- 38: Laufrollenachse
- 39: Ausnehmung
- 40: Endabschnitt
- 41: Endabschnitt
- 42: Sonnenrad
- 43: Kühleinrichtung
- 44: Lüfterrad
- 45: Lüfterradträger
- 46: Lager
- 47: Hohlrad
- 48: Planetenrad
- 49: Planetenrad
- 50: Planetengetriebe
- 51: Lager
- 52: Laufrollendeckel
- 53: Kühllufteinlass
- 54: Kühllufteinlass
- 55: Dichtelement
- 56: Flansch
- 57: Durchbruch
- 58: Dichtelement
- 59: Befestigungselement
- 60: Befestigungselement
- 61: Kühlluftführungskanal
- 62: Kühlluftführungsbalg
- 63: Kühlluftführungsbalg
- 64: Kühlluft
- 65: Strömungsrichtung
- 66: Gebläse
- 67: Kühllamelle
- 68: Kühllamelle
- 69: Wärmeleitschicht
- 70: Wärmeleitschicht

- x: x-Richtung
- y: y-Richtung
- z: z-Richtung

## Patentansprüche

1. Kettenlaufrolle (12, 12A, 12B, 12C, 12D) für ein militärisches Kettenfahrzeug (1), mit
einem Laufrollenkörper (21), der zumindest abschnittsweise aus einem faserverstärkten Kunststoffmaterial gefertigt ist,
einer um den Laufrollenkörper (21) umlaufenden Laufrollenbandage (34, 35), und
einer Kühleinrichtung (43) zum Kühlen der Laufrollenbandage (34, 35) im Betrieb der Kettenlaufrolle (12, 12A, 12B, 12C, 12D),
wobei die Kühleinrichtung (43) ein Lüfterrad (44) zum aktiven Kühlen der Laufrollenbandage (34, 35) im Betrieb der Kettenlaufrolle (12, 12A, 12B, 12C, 12D) aufweist, und
wobei das Lüfterrad (44) innerhalb des Laufrollenkörpers (21) angeordnet ist.

2. Kettenlaufrolle nach Anspruch 1,
**dadurch gekennzeichnet,**
**dass** der Laufrollenkörper (21) Kühlluftdüsen (32, 33) zum Zuführen von Kühlluft (64) zu der Laufrollenbandage (34, 35) aufweist.

3. Kettenlaufrolle nach Anspruch 2,
**dadurch gekennzeichnet,**
**dass** die Laufrollenbandage (34, 35) Kühlluftdurchlässe (36, 37), in welche die Kühlluftdüsen (32, 33) einmünden, aufweist.

4. Kettenlaufrolle nach Anspruch 2 oder 3,
**dadurch gekennzeichnet,**
**dass** eine Strömungsrichtung (65) der Kühlluft (64) aus einem Innenraum (27) des Laufrollenkörpers (21) hin zu einer Umgebung (4) der Kettenlaufrolle (12, 12A, 12B, 12C, 12D) orientiert ist.

5. Kettenlaufrolle nach einem der Ansprüche 1 - 4,
**gekennzeichnet durch**
ein Planetengetriebe (50) zum Antreiben des Lüfterrads (44).

6. Kettenlaufrolle nach Anspruch 5,
**gekennzeichnet durch**
einen Lüfterradträger (45), der das Lüfterrad (44) trägt, wobei der Lüfterradträger (45) ein Hohlrad (47) des Planetengetriebes (50) aufweist.

7. Kettenlaufrolle nach einem der Ansprüche 1 - 6,
**dadurch gekennzeichnet,**
**dass** die Kühleinrichtung (43) Kühllamellen (67, 68) zum Abführen von Wärme von der Laufrollenbandage (34, 35) aufweist, wobei die Kühllamellen (67, 68) radial in den Laufrollenkörper (21) hineinragen.

8. Kettenlaufrolle nach Anspruch 7,
**gekennzeichnet durch**
eine Wärmeleitschicht (69, 70), die zwischen einer Außenfläche (30, 31) des Laufrollenkörpers (21) und der Laufrollenbandage (34, 35) angeordnet ist, wobei die Wärmeleitschicht (69, 70) wärmeleitend mit den Kühllamellen (67, 68) verbunden ist.

9. Kettenlaufrollenanordnung (20A, 20B, 20C, 20D) für ein militärisches Kettenfahrzeug (1), mit
einem Schwingarm (13), und
einer Kettenlaufrolle (12, 12A, 12B, 12C, 12D) nach einem der Ansprüche 1 - 8, die um eine Drehachse (14) drehbar an dem Schwingarm (13) gelagert ist.

10. Kettenlaufrollenanordnung nach Anspruch 9,
**dadurch gekennzeichnet,**
**dass** der Schwingarm (13) zum Zuführen von Kühlluft (64) zu der Kettenlaufrolle (12, 12A, 12B, 12C, 12D) einen internen Kühlluftführungskanal (61) aufweist.

11. Kettenlaufrollenanordnung nach Anspruch 10,
**dadurch gekennzeichnet,**
**dass** der Kühlluftführungskanal (61) mit Hilfe von flexiblen Kühlluftführungsbälgen (62, 63) in Fluidverbindung mit der Kettenlaufrolle (12, 12A, 12B, 12C, 12D) ist.

12. Kettenlaufrollenanordnung nach einem der Ansprüche 9 - 11,
**gekennzeichnet durch**
einen Laufrollendeckel (52), der die Kettenlaufrolle (12, 12A, 12B, 12C, 12D) in Richtung des Schwingarms (13) verschließt, wobei der Laufrollendeckel (52) zumindest abschnittsweise aus einem faserverstärkten Kunststoffmaterial gefertigt ist.

13. Militärisches Kettenfahrzeug (1) mit einer Kettenlaufrolle (12, 12A, 12B, 12C, 12D) nach einem der Ansprüche 1 - 8 und/oder einer Kettenlaufrollenanordnung (20A, 20B, 20C, 20D) nach einem der Ansprüche 9 - 12.

## Claims

1. Continuous track roller (12, 12A, 12B, 12C, 12D) for a military tracked vehicle (1), comprising
a roller body (21), which is made at least in sections from a fiber-reinforced plastic material,
a roller bandage (34, 35) running around the roller body (21), and
a cooling device (43) for cooling the roller bandage (34, 35) during operation of the continuous track roller (12, 12A, 12B, 12C, 12D),
wherein the cooling device (43) comprises a fan wheel (44) for actively cooling the roller bandage (34, 35) during operation of the continuous track roller (12, 12A, 12B, 12C, 12D), and
wherein the fan wheel (44) is arranged within the roller body (21).

2. Continuous track roller according to claim 1,
**characterized in that**
the roller body (21) comprises cooling air nozzles (32, 33) for supplying cooling air (64) to the roller bandage (34, 35).

3. Continuous track roller according to claim 2,
**characterized in that**
the roller bandage (34, 35) comprises cooling air passages (36, 37) into which the cooling air nozzles (32, 33) open.

4. Continuous track roller according to claim 2 or 3,
**characterized in that**
a flow direction (65) of the cooling air (64) is oriented from an interior (27) of the roller body (21) towards a surroundings (4) of the continuous track roller (12, 12A, 12B, 12C, 12D).

5. Continuous track roller according to any one of claims 1 - 4,
**characterized by**
a planetary gear (50) for driving the fan wheel (44).

6. Continuous track roller according to claim 5,
**characterized by**
a fan wheel carrier (45) which carries the fan wheel (44), wherein the fan wheel carrier (45) comprises a ring gear (47) of the planetary gear (50).

7. Continuous track roller according to any one of claims 1 - 6,
**characterized in that**
the cooling device (43) comprises cooling fins (67, 68) for dissipating heat from the roller bandage (34, 35), wherein the cooling fins (67, 68) project radially into the roller body (21).

8. Continuous track roller according to claim 7,
**characterized by**
a heat-conducting layer (69, 70) which arranged between an outer surface (30, 31) of the roller body (21) and the roller bandage (34, 35), wherein the heat-conducting layer (69, 70) is connected to the cooling fins (67, 68) in a heat-conducting manner.

9. Continuous track roller assembly (20A, 20B, 20C, 20D) for a military tracked vehicle (1), comprising
a swing arm (13), and
a continuous track roller (12, 12A, 12B, 12C, 12D) according to one of claims 1 - 8, which is mounted on the swing arm (13) so as to be rotated about an axis of rotation (14).

10. Continuous track roller assembly according to claim 9,
**characterized in that**
the swing arm (13) comprises an internal cooling air duct (61) for supplying cooling air (64) to the continuous track roller (12, 12A, 12B, 12C, 12D).

11. Continuous track roller assembly according to claim 10,
**characterized in that**
the cooling air duct (61) is in fluid connection with the continuous track roller (12, 12A, 12B, 12C, 12D) by means of flexible cooling air guide bellows (62, 63).

12. Continuous track roller assembly according to any one of claims 9 - 11,
**characterized by**
a track roller cover (52) which closes the continuous track roller (12, 12A, 12B, 12C, 12D) in the direction of the swing arm (13), wherein the track roller cover (52) is made at least in sections from a fiber-reinforced plastic material.

13. Military tracked vehicle (1) comprising a continuous track roller (12, 12A, 12B, 12C, 12D) according to any one of claims 1 - 8 and/or a continuous track roller assembly (20A, 20B, 20C, 20D) according to any one of claims 9 - 12.

## Revendications

1. Rouleau de chenille continue (12, 12A, 12B, 12C, 12D) pour un véhicule militaire à chenilles (1), comprenant
un corps de rouleau (21), fabriqué au moins en partie à partir d'un matériau plastique renforcé de fibres,
un bandage de rouleau (34, 35) entourant le corps du rouleau (21), et
un dispositif de refroidissement (43) pour refroidir le bandage du rouleau (34, 35) pendant le fonctionnement du rouleau de chenille continue (12, 12A, 12B, 12C, 12D),
dans lequel le dispositif de refroidissement (43) comprend une roue de ventilateur (44) pour refroidir activement le bandage du rouleau (34, 35) pendant le fonctionnement du rouleau de chenille continue (12, 12A, 12B, 12C, 12D), et
dans lequel la roue de ventilateur (44) est disposée à l'intérieur du corps du rouleau (21).

2. Rouleau de chenille continue selon la revendication 1,
**caractérisé par le fait que**
le corps du rouleau (21) comprend des buses d'air de refroidissement (32, 33) pour fournir un air de refroidissement (64) au bandage du rouleau (34, 35).

3. Rouleau de chenille continue selon la revendication 2,
**caractérisé par le fait que**
le bandage du rouleau (34, 35) comprend des passages d'air de refroidissement (36, 37) dans lesquels débouchent les buses d'air de refroidissement (32, 33).

4. Rouleau de chenille continue selon la revendication 2 ou 3,
**caractérisé par le fait que**
une direction d'écoulement (65) de l'air de refroidissement (64) est orientée d'un intérieur (27) du corps du rouleau (21) vers un environnement (4) du rouleau de chenille continue (12, 12A, 12B, 12C, 12D).

5. Rouleau de chenille continue selon l'une des revendications 1 à 4,
**caractérisé par**
un engrenage planétaire (50) pour l'entraînement de la roue de ventilateur (44).

6. Rouleau de chenille continue selon la revendication 5,
**caractérisé par**
un support de roue de ventilateur (45) qui porte la roue de ventilateur (44), dans lequel le support de la roue de ventilateur (45) comprend une couronne dentée (47) de l'engrenage planétaire (50).

7. Rouleau de chenille continue selon l'une des revendications 1 à 6,
**caractérisé par le fait que**
le dispositif de refroidissement (43) comprend des ailettes de refroidissement (67, 68) pour dissiper la chaleur du bandage du rouleau (34, 35), où les ailettes de refroidissement (67, 68) faisant saillie radialement dans le corps du rouleau (21).

8. Rouleau de chenille continue selon la revendication 7,
**caractérisé par**
une couche conductrice de chaleur (69, 70) disposée entre une surface extérieure (30, 31) du corps du rouleau (21) et le bandage du rouleau (34, 35), la couche conductrice de chaleur (69, 70) étant reliée aux ailettes de refroidissement (67, 68) de manière à conduire la chaleur.

9. Ensemble de rouleaux de chenille continue (20A, 20B, 20C, 20D) pour un véhicule militaire à chenilles (1), comprenant
un bras oscillant (13), et
un rouleau de chenille continue (12, 12A, 12B, 12C, 12D) selon l'une des revendications 1 à 8, qui est monté sur le bras oscillant (13) de manière à pouvoir tourner autour d'un axe de rotation (14).

10. Ensemble de rouleaux de chenille continue selon la revendication 9,
**caractérisé par le fait que**
le bras oscillant (13) comprend un conduit d'air de refroidissement (61) interne pour fournir de l'air de refroidissement (64) au rouleau de chenille continue (12, 12A, 12B, 12C, 12D).

11. Ensemble de rouleaux de chenille continue selon la revendication 10,
**caractérisé par le fait que**
le conduit d'air de refroidissement (61) est en liaison fluide avec le rouleau de chenille continue (12, 12A, 12B, 12C, 12D) au moyen de soufflets flexibles de guidage de l'air de refroidissement (62, 63).

12. Ensemble de rouleaux de chenille continue selon l'une des revendications 9 à 11,
**caractérisé par**
un couvercle de rouleau de chenille (52) qui ferme le rouleau de chenille continue (12, 12A, 12B, 12C, 12D) en direction du bras oscillant (13), dans lequel le couvercle du rouleau de chenille (52) est fabriqué au moins en partie à partir d'un matériau plastique renforcé par des fibres.

13. Véhicule militaire à chenilles (1) comprenant un rouleau de chenille continue (12, 12A, 12B, 12C, 12D) selon l'une quelconque des revendications 1 à 8 et/ou un ensemble de rouleaux de chenille continue (20A, 20B, 20C, 20D) selon l'une quelconque des revendications 9 à 12.
